Europäisches Patentamt

(19) European Patent Office

Office européen des brevets

(11) Publication number: **0 010 072**

**A1**

(12) # EUROPEAN PATENT APPLICATION

(21) Application number: **79830037.2**

(22) Date of filing: **03.10.79**

(51) Int. Cl.³: **B 29 C 29/00**

(30) Priority: **04.10.78 IT 5136478**

(43) Date of publication of application:
**16.04.80** Bulletin **80/8**

(84) Designated Contracting States:
**BE DE FR GB IT NL**

(71) Applicant: **COSTARELLI, Edoardo**
**Località Strozzacapponi**
**I-06070 San Mariano (Perugia)(IT)**

(72) Inventor: **COSTARELLI, Edoardo**
**Località Strozzacapponi**
**I-06070 San Mariano (Perugia)(IT)**

(74) Representative: **Tonon, Gilberto et al,**
**c/o Società Italiana Brevetti Piazza Poli 42**
**I-00187 Roma(IT)**

(54) **An apparatus for cleaning and crumbling of waste material, particularly synthetic thermoplastics.**

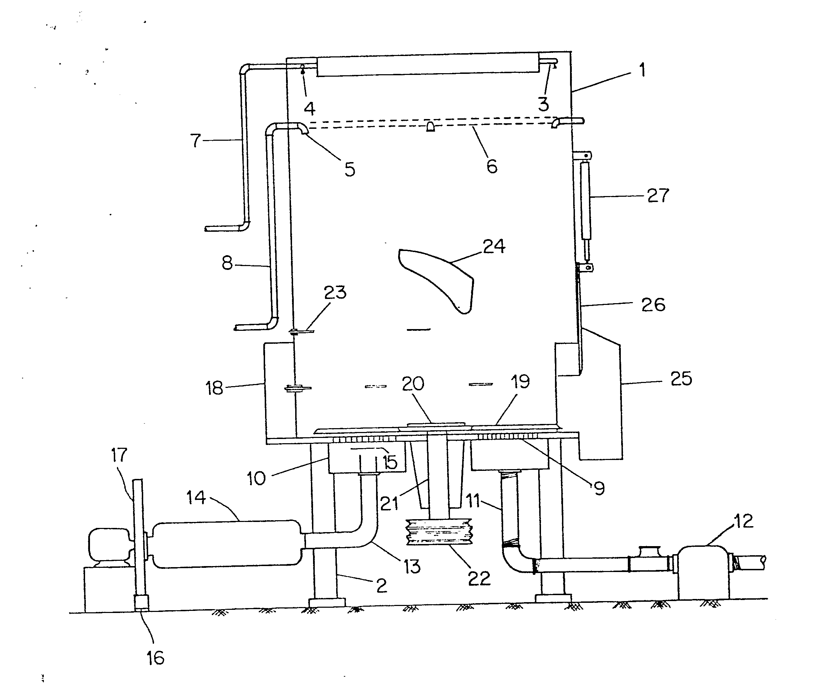

㉗ An apparatus for cleaning and crumbling waste material, particularly synthetic thermoplastics, in which the material to be treated is fed into a tank (1, in the only drawing enclosed) provided with a sprinkler device (3, 4, 7) and with a direct flow device (5, 6, 8) for the in-flow of a cleaning liquid; said material is stirred, cleaned and crumbled by means of a rotating device (19,20,21) at the bottom of said tank and by means of knives (23) on the perimeter wall of the tank. The liquid collected in a basin (10) beneath a grating (9) forming part of the bottom of the tank is evacuated by a pump (12); means (13,14,17) are also provided for predrying the cleaned material in said tank.

-1-

EDOARDO COSTARELLI

An apparatus for cleaning and crumbling of waste material, particularly synthetic thermoplastics.

The invention refers to an apparatus for cleaning and crumbling of waste material, in particular synthetic thermoplastics.

All processes pertaining to the recovery of thermoplastic waste material, which may then be re-used as raw-material, for instance reduced in loose granulated form, necessarily require said raw-material to be used in a clean condition; therefore generally the only source of supply is represented by properly conditioned scraps, thus excluding the extremely vast source of supply represented by objects of the said material which can be found,    but  not clean, in the waste from a city.

It is the object of this invention to provide an apparatus for the cleaning and crumbling of waste material, particularly grime contaminated synthetic thermoplastics,that may be further treated in later processes.

Said apparatus comprises substantially: a tank provided with an opening to load the material to be treated and an opening for the exit of material which has undergone treatment, at least the second opening being provided with a closing hatch door; means for the inflow of a rinsing liquid into the said tank; means for stirring the mass of material to be treated, which is submerged in the said rinsing liquid inside the said tank; cutting means, both fixed and movable, for crumbling the material to be treated while it is stirred inside the said tank; and means for the evacuation of said rinsing liquid.

The invention will be further described with reference to the only drawing enclosed illustrating the preferred embodiment, in which the apparatus is shown in a schematic elevation view, partially cross sectioned and broken away.

Referring to the drawing, reference number 1 indicates the tank for the material to be cleaned and crumbled, said tank being a cylindrical steel sheet container supported at a certain height from the ground by a frame base 2.

The lid of tank 1 is provided with a loading opening; an automatic discharge weighing hopper (not shown) is preferably placed on the said opening in order to control the quantity of material to be loaded into tank 1, said quantity depending on the capacity of the system.

Two devices, of which one is a sprinkler and the other is a direct flow device, are both housed inside the upper part of tank 1 and placed at different heights, for letting in the rinsing liquid, generally water, heated or not depending on needs, preferably enriched with suitable detergent substances.

The sprinkler device, placed above the direct flow device, comprises an annular conduit 3 on the inside of tank 1, said conduit being provided with a plurality of nozzles 4 adjustable both in flow and direction, and its function is to sprinkle the material to be washed from above, while the direct flow device comprises a certain number of inner outlets 5 adjustable in direction or fixed, placed at a distance all around the tank's inner circumference, the flow of said outlets 5 being also adjustable. Said outlets 5 are all connected to a common annular conduit 6 placed all around the outside of tank 1 and feeding the quantity of liquid required for keeping the material to be cleaned at least partially submerged.

The internal annular conduit 3 and the external annular conduit 6 are joined to corresponding pipes 7 and 8 connected with a supplying source (not shown) from which the rinsing liquid is conveyed under pressure to the said annular conduits by means of pumps (not shown).

The bottom of tank 1 is formed partially by a grating 9, interchangeable with other gratings of different size, and through said grating tank 1 communicates with an annular basin 10, beneath it, which collects the rinsing liquid.

Basin 10 is connected through a first conduit 11 to an emptying pump 12 which removes the rinsing liquid from basin 10 and is connected through a second conduit 13 to an aspirator 14 which has the function of pre-drying the cleaned material.

Suction conduit 13 extends for a certain length into basin 10, and said conduit is provided with a plate covering element 15 placed at a short distance from its

-4-

open end, said covering element stopping the rinsing liquid which falls into basin 10 from tank 1 through grating 9, from flowing into conduit 13.

The rinsing liquid, suction drained during the pre-drying operation, is eleminated through drain 16 towards which the said liquid is conveyed by a rotor 17.

In order to improve circulation of the rinsing liquid in tank 1 an annular chamber 18 is provided, which extends externally around the lower wall of tank 1 communicating with it through a plurality of holes (not shown) located on its corresponding perimetral wall.

A rotating device for stirring the loaded material together with the liquid in order to clean and crumble said material is placed near the inside surface of the bottom of tank 1.

Said rotating device comprises a number of cutting blades 19 placed all around the circumference of a hub 20 integral with one end of a rotating shaft 21, which extends axially,through a water tight seal, downwards through and out from the bottom of tank 1.

At the other end of shaft 21 a pulley 22 with three races is keyed, which is coupled to a motor (not shown) through an appropriate belt transmission (not shown).

It should be noted that hub 20 could alternatively be coupled directly to the shaft of a motor placed beneath tank 1.

In order to improve the operation of crumbling of the material to be rinsed, several knives 23 apt to slide radially with respect to tank 1 for best positioning, are placed at various heights on the perimetral wall of said tank 1.

In order to improve the stirring and crumbling action of the said rotating device, a number of adjustable ploughshare shaped elements (not shown) may be mounted on the surface of hub 20, to aid in pushing the material against the inside wall of tank 1 where knives 23 are located, said ploughshare elements themselves having sharp edges and/or associated cutting blades.

A certain number of ploughshare elements 24, either adjustable or fixed, are placed along the circumference of the internal wall of tank 1, having the function of directing the material to be washed towards the central working area of the said rotating device.

An opening is provided on the lower part of tank 1, allowing the cleaned and crumbled material to exit, said opening communicating with unloading hatch 25.

Said opening is closed vertically by a hatch door 26 controlled by a pneumatic cylinder 27.

The lower end of said hatch door 26 is provided with a sharp edge thus enabling it to cut away, during its descent, any residual amount of material between the lower edge of the exit and hatch door 26, which would result in a non perfect seal of the exit itself.

Through hatch 25 the clean crumbled and pre-dried material is preferably but not necessarily passed through a further pre-drying device (not shown) of any suitable type.

A short description of how the invention operates will now be given:

The material to be cleaned and crumbled is loaded from the said weighing hopper (not shown) and falls into tank 1 through its loading opening. Simultaneously forced distribution of the rinsing liquid, through nozzles 4 of the sprinkling device and outlets 5 of the direct flow device is carried out and the rotating device, with its cutting blades 19 is caused to turn. In this way the cleaning and crumbling steps take place and blades 19 of the said rotating device carry out the operation of stirring the mass of material mixed with the rinsing liquid so that as the said material is being cleaned it is also crumbled by both cutting blades 19 and knives 23 against which said material is driven while it is stirred.

At the end of the cleaning stage, the duration of which depends on the condition and type of the material to be treated, the rinsing liquid, which passes through grating 9 into the collecting basin 10, is discharged through pump 12 and conveyed out of the system or recycled after undergoing proper filtering.

At this point the aspirator 14 is actuated to predry the cleaned and crumbled material which then, after hatch door 26 has been opened, leaves tank 1 under the action of the rotating blades 19 through hatch 25 from which the material is passed through said further drying device (not shown), if desired, and then conveyed through appropriate means to storage or directly to the reutilization plant.

It should be noted that the cycle just described may be controlled manually step by step or, preferably, automatically by feeding the necessary data (such as quantity of material to be loaded, duration of rinsing and crumbling, duration of pre-drying etc.) into a suitable electric or electronic apparatus controlling step sequence.

-7-

The invention is not intended to be limited by the embodiment described herein and includes all executions thereof.

Claims:

1. Apparatus for cleaning an crumbling of waste material, particularly synthetic thermoplastics, characterized in that it comprises:

   a tank provided with an opening to load the material to be treated and an opening for the exit of material which has undergone treatment, at least the second opening being provided with a closing hatch door; means for the inflow of a rinsing liquid into the said tank; means for stirring the mass of material to be treated which is submerged in the said rinsing liquid inside the said tank; cutting means, both fixed and movable, for crumbling the material to be treated while it is stirred inside the said tank; and means for the evacuation of said rinsing liquid.

2. The apparatus according to claim 1, characterized in that said means for the inflow of a rinsing liquid into said tank comprise a direct flow device composed of a series of outlets placed at a distance along the entire circumference on the same plane or on different planes on the inside of said tank, which may be adjustable both in direction and amount of flow and are connected through appropriate pipes to a supply source.

3. The apparatus according to claim 1 or 2, characterized in that said means for the inflow of a rinsing liquid into said tank comprise a sprinkler device composed of an annular conduit, situated inside the said tank, provided with a plurality of nozzles which may be adjustable in both direction and amount of flow, and connected to a supply source through appropriate pipes.

4. The apparatus according to any preceding claim, characterized in that said means for stirring the mass of material to be treated which is submerged in the rinsing liquid inside said tank, are composed by a certain number of blades placed around a central hub and integral with it, said hub being positioned close to the surface of the tank's bottom, said hub being provided with means for connection to driving means in order to rotate.

5. The apparatus according to any preceding claim, characterized in that said fixed cutting means for crumbling the material to be treated while said material is stirred inside the said tank, are composed of knives placed at a distance along the circumference ,preferably on different planes, on the inside wall of said tank, their extension towards the inside of said tanks being adjustable, and the said movable cutting means comprise sharp edged blades of said stirring means, or cutting blades associated with said stirring means or both.

6. The apparatus according to any preceding claim, characterized in that the said rinsing liquid evacuation means comprise an interchangeable grating forming at least a part of the bottom of said tank, communicating with a collecting basin beneath it, which in turn communicates with an emptying pump.

7. The apparatus according to any preceding claim, characterized in that a chamber is provided extending around the outside lower part of said tank ,communicating with said tank and having the function of improving circulation of the rinsing liquid.

8. The apparatus according claim 6, characterized in that means for predrying of the treated material are provided, said means comprising at least one aspirator communicating with the said collecting basin, and having the function of removing the rinsing liquid left on the surfaces of the treated material after the said evacuation of the mass of the rinsing liquid itself.

9. The apparatus according to any preceding claim, characterized in that ploughshare elements are provided on the inside peripheral wall of the said tank, said elements being adjustable or fixed, and having the function of directing the material to be treated towards the central working area of the said stirring means.

10. The apparatus according to any preceding claim, characterized in that the said closing hatch door of the said openingfor the exit of treated material from the tank is provided with a lower sharp edge enabling it to cut away, during its descent, any residual amount of treated material which would result in a non perfect seal of the exit.

1/1

European Patent
Office

**EUROPEAN SEARCH REPORT**

0010072
Application number

EP 79 83 0037

## DOCUMENTS CONSIDERED TO BE RELEVANT

| Category | Citation of document with indication, where appropriate, of relevant passages | Relevant to claim |
|---|---|---|
| X | US - A - 4 015 781 (БECK)<br>* Column 5, lines 50-68; column 6, lines 1-17, 44-49; figure 5 * | 1-6,9 |
| | -- | |
| X | US - A - 3 833 178 (BECK)<br>* Figures 1,2 * | 1-6 |
| | ---- | |

CLASSIFICATION OF THE APPLICATION (Int. Cl. ⁴)

B 29 C 29/00

TECHNICAL FIELDS SEARCHED (Int.Cl. ³)

B 29 C 29/00
B 02 C
B 29 B
B 01 F

The present search report has been drawn up for all claims

| Place of search | Date of completion of the search | Examiner |
|---|---|---|
| The Hague | 19-12-1979 | SCHMIDL |

EPO Form 1503.1  08.78